# EUROPEAN PATENT SPECIFICATION

(11) **EP 1 730 905 B1**
(45) Date of publication and mention of the grant of the patent: **09.04.2008**
(21) Application number: 05715303.3
(22) Date of filing: 02.02.2005
(51) Int. Cl.: H04L 12/56

(54) **A METHOD OF MINIMISING DEAD TIME OF A PATH SET-UP AND TEAR-DOWN PROCESS IN A CENTRALLY CONTROLLED NETWORK**
EIN VERFAHREN ZUR MINIMIERUNG VON TOTZEITEN VON DURCHSCHALT- UND TRENNPROZESSEN IN EINEM ZENTRALGESTEUERTEN NETZWERK
PROCEDE DESTINE A REDUIRE LE TEMPS MORT D'UNE OPERATION D'ETABLISSEMENT ET DE SUPPRESSION DE VOIE DANS UN RESEAU A COMMANDE CENTRALISEE

(30) Priority: 31.03.2004 GB 0407155
(43) Date of publication of application: 13.12.2006
(73) Proprietor: Nokia Siemens Networks GmbH & Co. KG, 81541 München (DE)
(72) Inventor: DE VEGA RODRIGO, Miguel, B-1200 Brussels (BE); PLEICH, Robert, 81739 München (DE)
(74) Representative: Payne, Janice Julia
(86) International application number: PCT/EP2005/001403
(87) International publication number: WO 2005/096559

(56) References cited:
- QIAO C ET AL: "POLYMORPHIC CONTROL FOR COST-EFFECTIVE DESIGN OF OPTICAL NETWORKS" EUROPEAN TRANSACTIONS ON TELECOMMUNICATIONS, AEI, MILANO, IT, vol. 11, no. 1, January 2000 (2000-01), pages 17-26, XP000949612 ISSN: 1124-318X
- BALDINE I ET AL: "JUMPSTART: A JUST-IN-TIME SIGNALING ARCHITECTURE FOR WDM BURST-SWITCHED NETWORKS" IEEE COMMUNICATIONS MAGAZINE, IEEE SERVICE CENTER. PISCATAWAY, N.J, US, vol. 40, no. 2, February 2002 (2002-02), pages 82-89, XP001125422 ISSN: 0163-6804
- HUDEK G C ET AL: "SIGNALING ANALYSIS FOR A MULTI-SWITCH ALL-OPTICAL NETWORK" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), NEW YORK, IEEE, US, vol. VOL. 2, 18 June 1995 (1995-06-18), pages 1206-1210, XP000533175 ISBN: 0-7803-2487-0

## Description

This invention relates to a method of minimising dead time of a path set-up and tear-down process in a centrally controlled network, in particular for optical networks.

Conventionally path set-up and tear-down in centralised networks has been carried out in relatively low capacity networks, so dead time has not been a major concern. However, with the increasing use of high capacity optical networks, dead time is becoming more significant. When an old path is torn down to allow a new one to be made, there is a dead time when no data can be sent which is related to the switching time of the slowest switch in the two paths. It is desirable that this should be minimised.

In accordance with the present invention, a method of minimising a dead time in which no information can be sent in a centrally controlled network, wherein a first time t1 comprises the time when a last bit of information for an old connection path is sent; wherein a second time t2 comprises the time when a first bit of information for a new connection path is sent; wherein a third time tswitch comprises a switching time of the slowest switch belonging to either the old or the new connection path; and wherein the dead time comprises t2 minus t1 minus tswitch; comprises receiving at a central controller of the network, a path setup message from a node; determining a transmission time for each set-up and tear-down signal required to set up the new path; deriving an order of sending of the signals such that each signal arrives at its destination at approximately the same time; sending a tear-down signal to each node which is sending information on an existing path; and sending a set-up signal to each node in a new path; wherein each signal is sent in the derived order.

The present invention allows optimisation of path setup and teardown in centralized optical networks enabling the dead time to be reduced as much as possible.

Preferably, the controller sends a test signal to each node to determine the propagation delay of each link before deriving the signal sending order.

The controller may have to queue signals, if it can only process and send one at a time, but preferably, the central controller operates in parallel, such that each signal can be sent at a time resulting in the signal arrive at its destination substantially simultaneously with the other signals.

Although the method can be applied to many types of network, preferably, the network is an optical network.

An example of a method of minimising dead time of a path set-up and tear-down process in a centrally controlled network according to the present invention will now be described with reference to the accompanying drawings in which:
Figure 1 illustrates a typical centralised architecture for which the method of the present invention is applicable; and,
Figure 2 illustrates setting up an optical path in the architecture of Fig. 1.

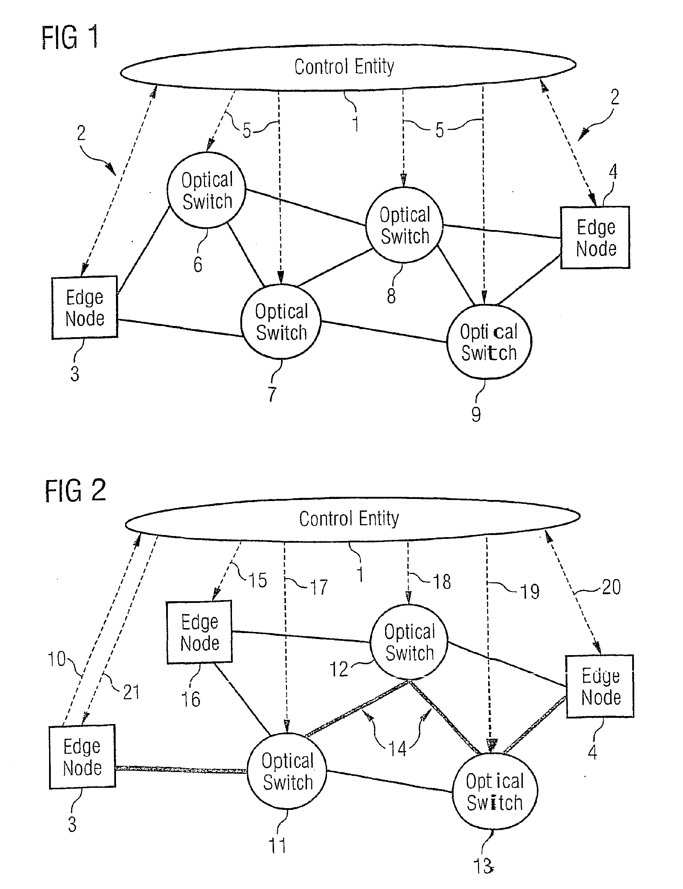

A typical centrally controlled optical network is illustrated in Fig. 1. Signalling in centralized networks is done via one or several control entities which are in charge of coordinating the rest of the network elements. A control entity 1 communicates 2 with edge nodes 3, 4. In order to set up a particular path through the network, path setup or tear down messages 5 must be sent to the relevant optical switch 6, 7, 8, 9, so that a connection between the edge nodes via the chosen optical switches is made or destroyed accordingly.

Consider the case where an old path is destroyed in order to create a new path. Between the destruction of the old path and the creation of the new one, there is a time interval in which no information can be sent due to the path setup and teardown signalling. This time interval is called the dead time which is equal to t2 - t1 - tswitch, where t1 is the time when the last bit of information for the old connection was sent, t2 is the time when the first bit of information for the new connection is sent, and tswitch is the switching time of the slowest switch belonging to either the old path or the new path. That is, the dead time is the time between sending the last bit of the old connection and the first bit of the new connection, but without taking into account the slowest switching time in any of the connections.

A particular type of optical network for which the invention is applicable is a network with a two way reservation scheme. In such schemes two types of signalling messages are necessary in order to make a connection between two edge nodes, a path setup message to initiate the connection and an acknowledge (ACK) message to confirm or deny the availability of resources for the connection. Generally, the centralized path setup and teardown procedure has been implemented in lower capacity networks, where the dead time is not considered to be particularly important, so no particular attention was paid to the exact synchronization of the signals. However, in optical networks with link speeds in the order of Gbps, a dead time in the order of milliseconds can mean that Mbits of bandwidth are wasted.

In Fig. 2, a specific example of setting up a path between the edge nodes 3, 4 is shown. A path setup message 10 is sent from the edge node 3 to the control entity 1, which then generates and sends a setup signal to each one of a plurality of nodes belonging to a new path 14 - in this case optical switches 11, 12, 13 and edge node 4. In addition, the control entity 1 sends a teardown signal 15 to a source edge node 16 that was sending information through an old path. The teardown signal 15 is sent first, so that no information gets lost, but individual setup signals 17, 18, 19, 20 to the switches and nodes 11, 12, 13, 4 in the new path 14 were conventionally sent in no particular order. Finally, when the new path is set up, an ACK message 21 is sent.

The lengths of the links of the signalling network vary, so that the transmission time of each signalling message 15, 17, 18, 19, 20 differs from the others. This difference might be non-negligible in Metro networks and considerable in Core networks, where the distance from the control entity to the nodes can be of the order of hundreds of kilometres. Therefore the time elapsed between the arrival of the teardown signal 15 at the source edge node 16 of the old path and the arrival of the ACK signal 21 at the edge node 3 which is the source edge node of the new path, the dead time, can be considerable. Thus, conventional signalling methods lead to large and unpredictable dead times.

The present invention addresses this problem by sending the teardown 15, path setup 17, 18, 19, 20 and ACK 21 signals, such that they all arrive at their respective destinations at approximately the same time. This means that it is possible to reduce the dead time to zero in the case were sufficiently good synchronization of the signals is provided, and at the very least, the dead time is significantly reduced. The invention takes advantage of the behavioural predictability of centralized optical networks in order to create a path setup and teardown method that manages the bandwidth in a highly efficient way.

Again, the example of Fig. 2 can be used to explain the present invention. When the edge node 3 sends its path setup message 10 to the control entity 1, the control entity must then work out the order in which to send the signals 15, 17, 18, 19, 20, 21, so that they all arrive at the same time. To do this, the propagation delay of each signalling link has to be taken into account. Generally, the propagation delay, equal to signal propagation speed divided by length of the line, is a well known parameter which can be provided to the control entity by various means. However, there will be some circumstances where this parameter is not known, in which case the control entity has to calculate the propagation delay by sending a test signal to each element in the network and measuring the time until a response arrives.

Having obtained the propagation delays, then it is necessary to derive a time at which each signal has to be sent. If the control entity is capable of working in parallel and able to send many signals at a time, then it simply needs a timer in order to send each signal at its proper time, so that they all arrive at their destinations at the same time. However, there may be situations where the control entity can only send one signal at a time. This means that there is only one waiting queue and one processor to analyze and send the signals, so it is necessary to manage the priorities in the queue correctly. Each signal is given a priority in the queue according to its propagation time, so that signals with a bigger propagation time are given a higher priority in order to be sent first. The queuing discipline is not a normal one in which a signal enters the processor as soon as it is free. The processor knows at which time each signal has to be sent, so it begins processing the next signal only when it is time to send it, and not before. If a signal is sent before or after its calculated time, the dead time is increased. Therefore the queuing discipline will try to serve and to send each signal at its proper time.

The mechanism is especially important for highly loaded adaptive path optical networks (APON). When APON networks are highly loaded their lambda switching regime is reduced to virtually zero, so that one burst is sent right after another, in the same way as in optical burst switching (OBS) networks. This situation is highly demanding since it reduces the life of a path to a burst transmission time. It therefore requires optical paths to be dynamically created and destroyed burst after burst. Without an efficient path setup and teardown mechanism that reduces the dead time as much as possible, high loaded APON networks may lead to a poor bandwidth usage.

The present invention allows the dead time between teardown and setup to be reduced to zero, leading to better bandwidth usage and the possibility of transferring more information through the same network. Furthermore, it optimises the operation of highly loaded APON networks whilst still complying with the philosophy of centralised networks that complexity should be kept out of the edge nodes and optical switches. No hardware modification is required, so the method can be applied to existing systems without significant cost.

## Claims

1. A method of minimising a dead time in which no information can be sent in a centrally controlled network, wherein a first time t1 comprises the time when a last bit of information for an old connection path is sent; wherein a second time t2 comprises the time when a first bit of information for a new connection path (14) is sent; wherein a third time tswitch comprises a switching time of the slowest switch belonging to either the old or the new connection path; and wherein the dead time comprises t2 minus t1 minus tswitch; the method comprising receiving at a central controller (1) of the network, a path setup message (10) from a node (3); determining a transmission time for each set-up signal (17, 18, 19, 20) and tear-down signal (15) required to set up the new path; deriving an order of sending of the signals such that each signal arrives at its destination at approximately the same time; sending the tear-down signal (15) to each node which is sending information on an existing path; and sending the set-up signal (17,18, 19, 20) to each node (11, 12, 13, 4) in the new path (14); wherein each signal is sent in the derived order.

2. A method according to claim 1, wherein the controller (1) sends a test signal to each node (16, 11, 12, 13, 4) to determine the propagation delay of each link before deriving the signal sending order.

3. A method according to any preceding claim, wherein the central controller (1) operates in parallel, such that each signal (15, 17, 18, 19, 20) can be sent at a time resulting in the signal arriving at its destination (16, 11, 12, 13, 4) substantially simultaneously with the other signals.

4. A method according to any preceding claim, wherein the network is an optical network.

## Patentansprüche

1. Verfahren zur Minimierung einer Totzeit, in der keine Informationen in einem zentral gesteuerten Netz gesendet werden können, wobei eine erste Zeit t1 die Zeit umfaßt, wenn ein letztes Informationsbit für einen alten Verbindungsweg gesendet wird; wobei eine zweite Zeit t2 die Zeit umfaßt, wenn ein erstes Informationsbit für einen neuen Verbindungsweg (14) gesendet wird; wobei eine dritte Zeit tswitch eine Umschaltezeit des langsamsten Schalters umfaßt, der entweder zum alten oder zum neuen Verbindungsweg gehört; und wobei die Totzeit t2 minus t1 minus tswitch umfaßt; wobei das Verfahren Empfangen an einer Zentralsteuerung (1) des Netzes von einer Wegedurchschaltenachricht (10) von einem Knoten (3); Bestimmen einer Übertragungszeit für jedes zum Durchschalten des neuen Weges erforderliche Durchschaltesignal (17, 18, 19, 20) und Abbausignal (15); Ableiten einer Reihenfolge des Sendens der Signale, so daß jedes Signal annähernd zur gleichen Zeit an seinem Ziel ankommt; Senden des Abbausignals (15) zu jedem Knoten, der Informationen auf einem bestehenden Weg sendet; und Senden des Durchschaltesignals (17, 18, 19, 20) zu jedem Knoten (11, 12, 13, 4) auf dem neuen Weg (14) umfaßt; wobei jedes Signal in der abgeleiteten Reihenfolge gesendet wird.

2. Verfahren nach Anspruch 1, wobei die Steuerung (1) zum Bestimmen der Laufzeit jeder Strecke vor Ableitung der Signalsendereihenfolge ein Prüfsignal zu jedem Knoten (16, 11, 12, 13, 4) sendet.

3. Verfahren nach einem beliebigen vorhergehenden Anspruch, wobei die Zentralsteuerung (1) parallel arbeitet, so daß jedes Signal (15, 17, 18, 19, 20) zu einer Zeit gesendet werden kann, die bewirkt, daß das Signal im wesentlichen gleichzeitig mit den anderen Signalen an seinem Ziel (16, 11, 12, 13, 4) ankommt.

4. Verfahren nach einem beliebigen vorhergehenden Anspruch, wobei das Netz ein optisches Netz ist.

## Revendications

1. Procédé de réduction d'un temps mort pendant lequel aucune information ne peut être envoyée dans un réseau à commande centralisée, dans lequel un premier temps t1 comprend le temps où un dernier bit d'information pour une ancienne voie de connexion est envoyé ; dans lequel un deuxième temps t2 comprend le temps où un premier bit d'information pour une nouvelle voie de connexion (14) est envoyé ; dans lequel un troisième temps t_{commutation} comprend un temps de commutation du commutateur le plus lent appartenant soit à l'ancienne, soit à la nouvelle voie de connexion ; et dans lequel le temps mort comprend t2 moins t1 moins t_{commutation} ; le procédé comprenant la réception, au niveau d'un contrôleur central (1) du réseau, d'un message d'établissement de voie (10) provenant d'un noeud (3) ; la détermination d'un temps de transmission pour chaque signal d'établissement (17, 18, 19, 20) et signal de suppression (15) nécessaire pour établir la nouvelle voie ; la dérivation d'un ordre d'envoi des signaux de manière à ce que chaque signal arrive à sa destination à peu près au même instant ; l'envoi du signal de suppression (15) à chaque noeud qui envoie des informations sur une voie existante ; et l'envoi du signal d'établissement (17, 18, 19, 20) à chaque noeud (11, 12, 13, 4) dans la nouvelle voie (14) ; dans lequel chaque signal est envoyé dans l'ordre dérivé.

2. Procédé selon la revendication 1, dans lequel le contrôleur (1) envoie un signal test à chaque noeud (16, 11, 12, 13, 4) pour déterminer le délai de propagation de chaque liaison avant de dériver l'ordre d'envoi des signaux.

3. Procédé selon l'une des revendications précédentes, dans lequel le contrôleur central (1) opère en parallèle de manière à ce que chaque signal (15, 17, 18, 19, 20) puisse être envoyé à un instant permettant au signal d'arriver à sa destination (16, 11, 12, 13, 4) de manière essentiellement simultanée avec les autres signaux.

4. Procédé selon l'une des revendications précédentes, dans lequel le réseau est un réseau optique.
